# Europäisches Patentamt
## European Patent Office
### Office européen des brevets

(19)

(11) Veröffentlichungsnummer: **0 239 572**
**B1**

(12) **EUROPÄISCHE PATENTSCHRIFT**

(45) Veröffentlichungstag der Patentschrift: **25.07.90**

(21) Anmeldenummer: **85905400.9**

(22) Anmeldetag: **09.10.85**

(86) Internationale Anmeldenummer:
**PCT/EP85/00523**

(87) Internationale Veröffentlichungsnummer:
**WO 87/02500 23.04.87 Gazette 87/09**

(51) Int. Cl.⁵: **G 11 B 15/14, G 11 B 27/10 //
H04N5/783**

(54) **VERFAHREN ZUR ERZEUGUNG DES KOPFSCHALTSIGNALS UND DES VERTIKALSYNCHRONSIGNALS BEI VIDEORECORDERN.**

(43) Veröffentlichungstag der Anmeldung:
**07.10.87 Patentblatt 87/41**

(45) Bekanntmachung des Hinweises auf die
Patenterteilung: **25.07.90 Patentblatt 90/30**

(84) Benannte Vertragsstaaten:
**AT BE CH DE FR GB IT LI LU NL SE**

(56) Entgegenhaltungen:
**EP-A-0 116 926
GB-A-1 004 095
GB-A-1 537 411
JP-A-56 124 105
JP-A-56 127 905**

**Patents Abstracts of Japan, Band 6, Nr. 2,
(P-96)(880) 8. Januar 1982 & JP-A-56127905
Patents Abstracts of Japan, Band 5, Nr. 202,
(P-95)(874) 22. Dezember 1981 & JP-A-56124105
Patents Abstracts of Japan, Band 5, Nr. 82,
(E-59)(754) 29 Mai 1981 & JP-A-5628573**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **GLEIM, Günter
Terra Wohnpark 8
D-7730 VS-Villingen 24 (DE)**

Courier Press, Leamington Spa, England.

**Beschreibung**

Die Erfindung bezieht sich auf ein Verfahren zur Erzeugung der Kopfschalt- und Vertikalsynchronsignale bei Videorecordern mit einer Kopftrommel mit Abtastköpfen unter Verwendung eines pro Umdrehung der Kopftrommel erzeugten Markierungssignals, bei dem für die Zeitdauer einer ersten Umdrehung der Kopftrommel durch das Markierungssignal eine Zählung von Clock-Impulsen in einem ersten Zähler ausgelöst wird, während einer weiteren Umdrehung der Kopftrommel durch das Markierungssignal eine weitere Zählung von Clock-Impulsen in einem zweiten Zähler ausgelöst wird, die Zählergebnisse miteinander verglichen werden und bei Übereinstimmung ein Signal abgegeben wird.

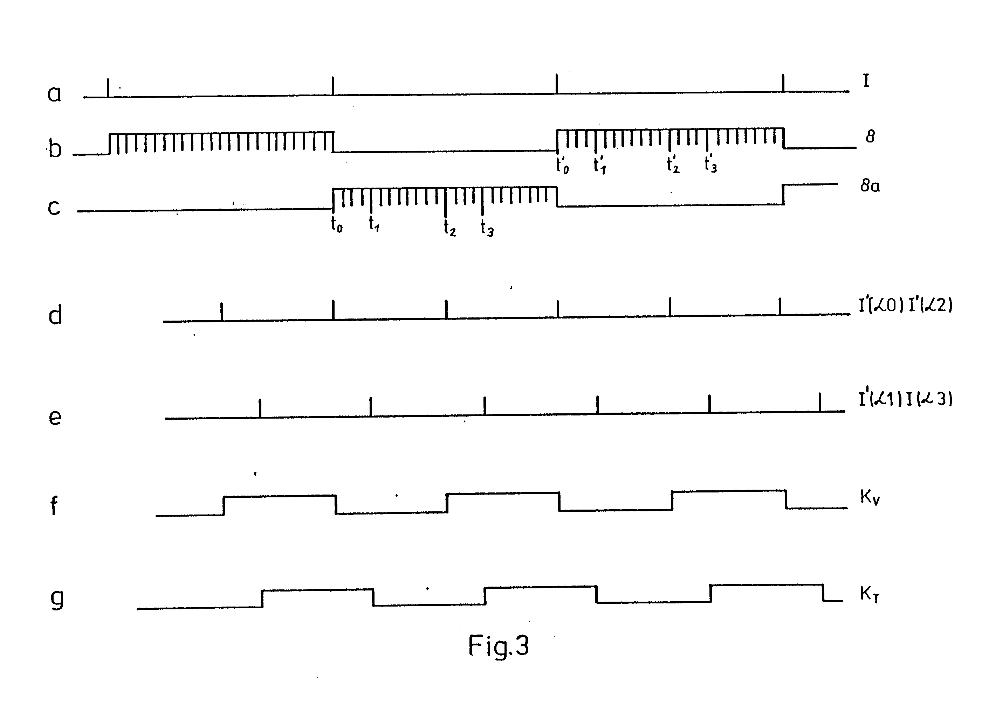

Bei Videorecordern, die z.B. nach dem VHS-System arbeiten, entspricht eine Umdrehung der Kopftrommel der Aufzeichnung eines Vollbildes auf einem Magnetband, das mit zwei Videoköpfen aufgezeichnet wird. Bei der Wiedergabe müssen die Videoköpfe bei einem Umdrehungswinkel von 180° umgeschaltet werden. Die Information zur Umschaltung erhält man üblicherweise von Abtastsystemen, die pro Winkeldrehung um 180° einen Impuls abgeben. Es ist auch bekannt pro Umdrehung der Kopftrommel nur einen Impuls abzuleiten und durch Zeitmessung, z.B. Zeitablauf einer monostabilen Kippstufe, den dazwischenliegenden Impuls zu generieren. Bei unterschiedlichen Drehzahlen jedoch, z.b. bei Trickmode wie Standbild, Zeitlupe, Zeitraffer müssen jeweils mehrere Zeitglieder der monostabilen Kippstufe einjustiert werden (JVC-Manual 1983 Fig. 3—23). Diese Zeitglieder werden über Kontakte umgeschaltet. Diese Anordnung unterliegt jedoch Toleranzen bei Drehzahlschwankungen, ist abhängig von Temperatur und Alterung, so daß ein vertikales Zittern des Bildes nicht zu vermeiden ist. Die Abweichung der Vertikalsynchronimpulse von einem Halbbild zum nächsten sollte sehr klein sein, um ein zitterfreies Bild zu erhalten. Das Kopfschaltsignal ist zum Generieren des Vertikalsynchronimpulses nur dann geeignet, wenn die Toleranzen wesentlich kleiner sind als es die derzeitige Norm zulässt.

Es ist weiterhin ein Verfahren zur Erzeugung der Kopfschalt und Vertikalsynchronsignale bekannt, bei welchem für die Zeitdauer einer ersten Umdrehung der Kopftrommel durch ein Markierungssignal eine Zählung von Clockimpulsen (CP) in einem ersten Zähler ausgelöst wird, während einer weiteren Umdrehung der Kopftrommel durch das Markierungssignal eine weitere Zählung von Clockimpulsen (2CP) in einem zweiten Zähler ausgelöst wird. Die beiden Zählergebnisse werden miteinander verglichen und bei Übereinstimmung wird ein Signal abgegeben. (JP—A—56 124 105 und Patents Abstracts of Japan, Band 5, Nr. 202, (P-96) (874), 22. Dez. 1981).

Es ist auch ein Verfahren zur Erzeugung der Kopfschalt- und Vertikalsynchronsignale bei Videorecordern bekannt, bei welchem eine Kopftrommel mit zwei Abtastköpfen verwendet wird (JP—A—56 127 905). Pro Umdrehung der Kopftrommel wird ein Markierungssignal erzeugt und für die Zeitdauer einer ersten Umdrehung der Kopftrommel wird durch das Markierungssignal eine Zählung von Clockimpulsen ausgelöst. Das Zählergebnis muss zunächst ausgelesen werden und in ein Zwischenregister nach Teilung zwischengespeichert werden. Diese Vorgänge haben aber eine Laufzeit, die bei der vorhandenen hohen Clockfrequenz, die für eine hohe Genauigkeit wichtig ist, nicht zu vernachlässigen ist. Ein nachfolgender Clockimpuls für den Zähler darf nicht eintreffen, bevor die Vorgänge abgeschlossen sind. Das heißt, der Zähler darf nicht vorher zurückgesetzt werden, bevor er ausgelesen ist. Der Zähler muß also sein Ergebnis für eine Zeit bereitstellen, die nicht zu vernachlässigen ist. Es entsteht somit eine gewissen Totzeit, die Fehler in der exakten zeitlichen Zuordnung des erzeugten Kopfschaltimpulses zur Folge haben.

Der Erfindung liegt die Aufgabe zugrunde, sowohl die Kopfschalt- als auch die Vertikalsynchronimpulse unter Einhaltung enger Toleranzen unabhängig von Drehzahländerungen zu erzeugen, um ein Zittern des wiedergegebenen Bildes zu vermeiden. Die Erfindung bringt den Vorteil, daß zur Zählung nur eine einzige Clockfrequenz notwendig ist, wobei das Zählergebnis jeder Umdrehung ausgewertet und dadurch das Resultat jeweils auf den aktuellen Stand gebracht wird.

Die Erfindung umgeht dagegen den oben geschilderten Nachteil durch Einsatz eines parallelen Zählers. Während der eine Zähler zählt, steht in dem anderen das Ergebnis bereits über die Teiler zum Vergleich bereit. Während jeweils ein Zähler die Clockimpulse zählt, stellt der andere bereits das Vergleichsergebnis zur Verfügung. Mit der nächsten Flanke des Impulses vom Geber wird der Generator auf den anderen Zähler umgeschaltet, der gleichzeitig zurückgesetzt wird. Es entfallen hier gänzlich irgendwelche Zeitprobleme, so daß die Anordnung nach dem Anmeldegegenstand wesentlich präziser arbeitet.

Nachstehend soll die Erfindung mit Hilfe der Zeichnung an Ausführungsbeispielen erläutert werden.

Figur 1 zeigt eine Kopfradtrommel mit 2 Abtastkopfpaaren;

Figur 2 zeigt ein Blickschaltbild zur Erläuterung der Erfindung;

Figur 3 zeigt Impulsdiagramme zur Erläuterung der Figur 2;

Figur 4 zeigt ein weiteres Blockschaltbild zur Erläuterung der Erfindung in Anwendung auf ein System mit einem Abtastkopfpaar;

Figur 5 zeigt Impulsdiagramme zur Erläuterung der Figur 4.

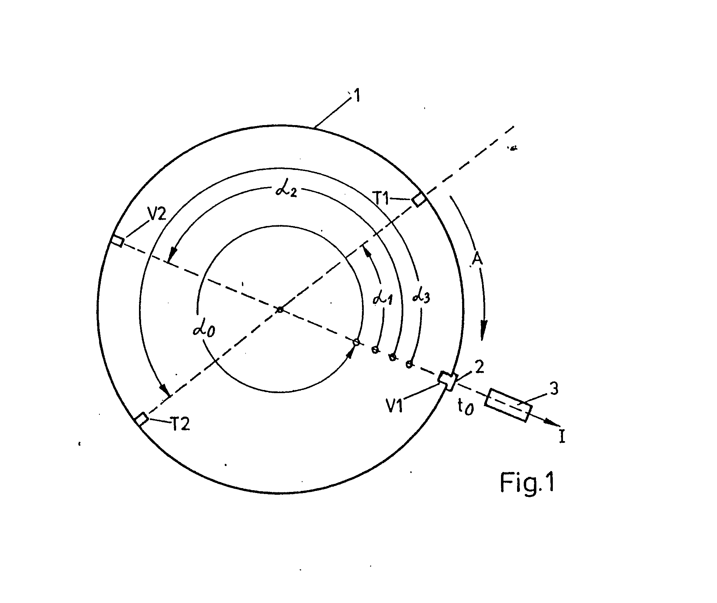

In Figur 1 ist eine Kopftrommel 1 dargestellt, an welcher zwei Abtastkopfpaare für Video V1 und V2 und Ton T1 und T2 angeordnet sind. Die Videoköpfe V1 und V2 sind in bekannter Weise ebenso wie die Tonköpfe T1 und T2 gegenseitig um einen Winkel von 180° angeordnet. Im gezeigten Beispiel seien die Tonköpfe gegenüber den Videoköpfen um α = 60° versetzt. Die Kopftrommel drehe sich im Uhrzeigersinn in Pfeilrichtung. Eine mit der Kopftrommel 1 verbundene Markierung 2 erzeugt über den Abtaster 3 pro Umdrehung Signale I.

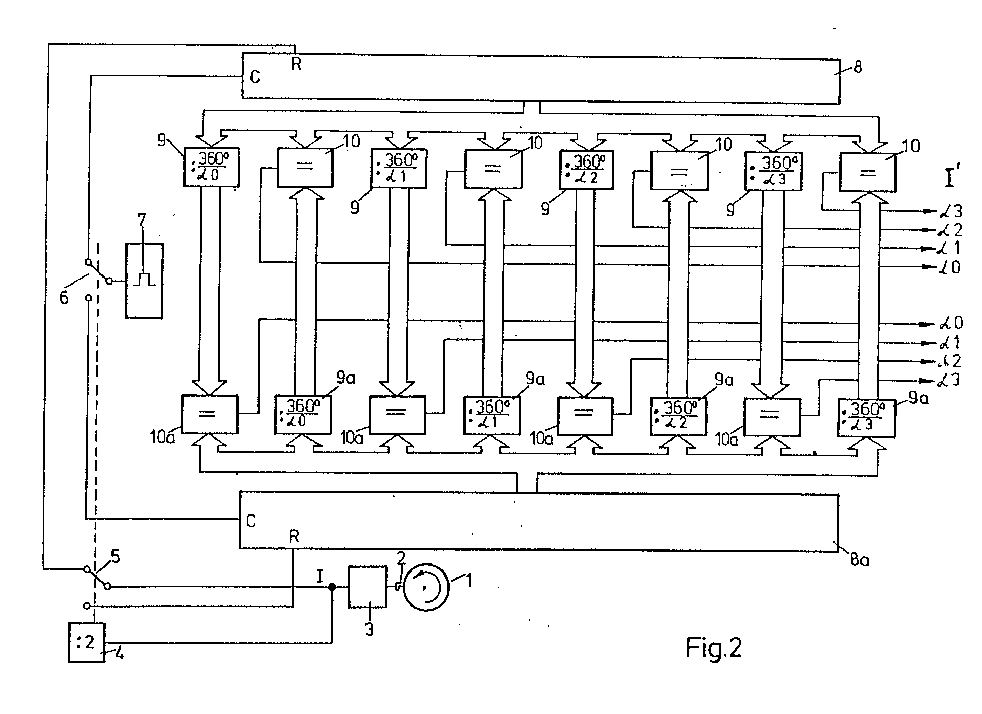

Zur Erläutgerung der Wirkungsweise des angemeldeten Verfahrens zur Erzeugung der Vetikalsynchronimpulse und/oder der Kopfschaltimpulse dient das Blockschaltbild nach Figur 2. Es sei betont, daß das angemeldete Verfahren geeignet ist, einen Teil eines von einem Mikroprozessor abzuarbeitenden Programms zu bilden.

Mit 1 ist die umlaufende Kopftrommel angedeutet, die neben anderen nicht dargestellten Markierungen, die z.B. zur Kommutierung des Kopftrommelmotors dienen, eine Markierung 2 trägt, welche pro Umdrehung mit Hilfe des Abtasters 3 ein Signal I erzeugt. Dieses Signal I betätigt über eine bistabile Kippstufe 4 zwei Umschalter 5 und 6. Über den Umschalter 5 werden wechselweise pro Umdrehung der Kopftrommel 1 die Zählerstufen 8 bzw. 8a auf einem definierten Anfangswert, z.B. auf Null gesetzt. Die Zählerstufen 8 und 8a können jedoch auch auf einen beliebigen aber stets gleichen definierten Anfangswert gesetzt werden. Der Umschaltkontakt 6 legt einen Systemtakt 7 wechselweise an die Clock-Eingänge C der Zählerstufen 8 bzw. 8a. Es sei angenommen, daß zunächst die Zählerstufe 8 mit Taktimpulsen 7 beaufschlagt wird. Am Ende der Kopftrommelumdrehung hat die Zählerstufe 8 einen bestimmten Zählwert als Zeitmaß für die Umdrehung eingenommen. Nach der Umschaltung der Umschalter 5 und 6 wird die zweite Zählerstufe 8a zurückgesetzt und beginnt mit der Zählung der einlaufenden Taktimpulse 7. Das laufende Zählergebnis der Zählerstufe 8a wird nun verglichen mit definierten Bruchteilen des Zählergebnisses der Zählerstufe 8. Dazu wird das Zählergebnis in Teilerstufen 9 durch einen Faktor 360°/α geteilt, wobei α den Winkel darstellt, den ein Abtastkopf in Bezug auf den durch das abgeleitete Signal I gebildeten Bezugswinkel einnimmt. Der Tonkopf T1 hat in dem gezeigten Beispiel nach Figur 1 einen Winkel α 1, der Videokopf V2 einen Winkel α 2 der Tonkopf T2 einen Winkel α 3 und der Videokopf V1 einen Winkel α 0. Immer wenn das Zählergebnis des laufenden Zählers 8a einen Wert der von den Teilerstufen 9 ausgegebenen Werte erreicht, wird ein Signal I' erzeugt. Das ist der Fall zu den Zeitpunkten t0, t1, t2 und t3 (Fig. 3). Dies geschieht über die Vergleichsstufen 10. Nach einer Umdrehung der Kopftrommel 1 übernimmt die Zählerstufe 8 die laufende Messung und die Zählstufe 8a dient als Speicher. Die Teilung des letzten Meßergebnisses erfolgt mittels der Teiler 9a der Vergleich geschieht über die Vergleicher 10a.

In Figur 3a sind die von dem Abtaster 3 erzeugten Signale I aufgetragen. In Figur 3b und 3c ist gezeigt, wann die Zählerstufe 8 und wann die Zählerstufe 8a arbeitet. In Figur 3d sind die Signale I' für die Winkel α0 und α2 und in Figur 3e die Signale I' für die Winkel α1 und α3 dargestellt. Aus diesen können die Kopfschaltsingale KV und KT abgeleitet werden (Fig. 3f und g).

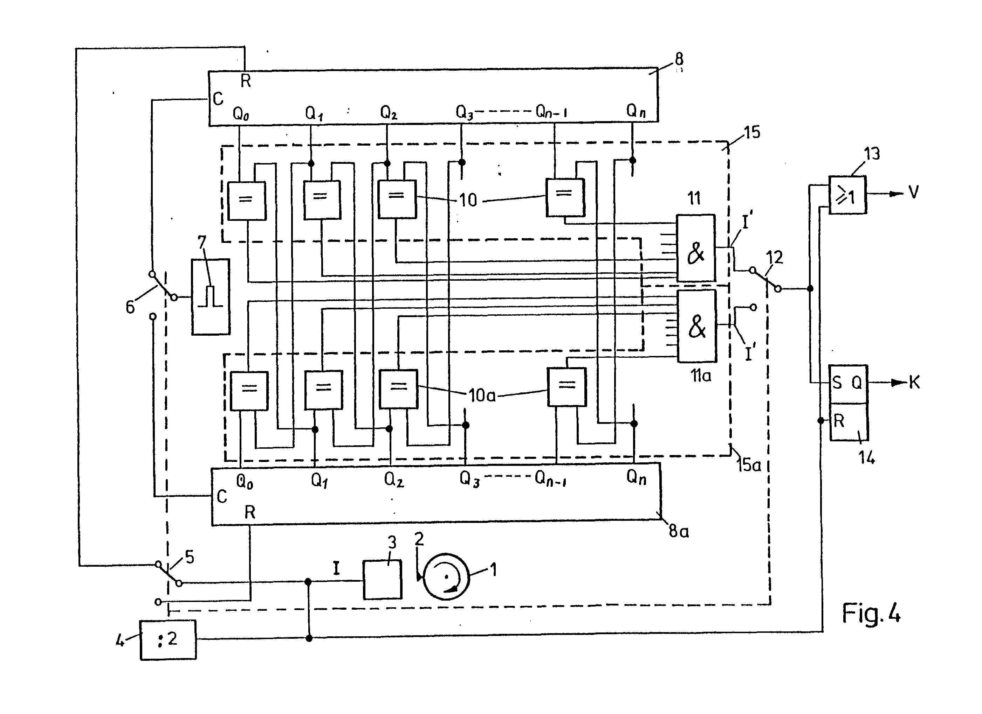

In Figur 4 ist an einem einfachen Beispiel einer Kopftrommel mit nur einem Abtastkopfpaar die Wirkungsweise der Erfindung erläutert, wobei die Schaltung nach Figur 4 dazu dient, aus den Signalen I die Vertikalsynchronsignale V und Kopfschaltsignale K abzuleiten. Hierbei entsprechen sich die gleichen Bauteile mit gleichem Bezugszeichen der Fig. 2. Hierbei handelt es sich um die Erzeugung eines Signals I' welches zur Generierung der Vertikalsynchron- und Kopfschaltsignale im Abstand von 180° zwischen die vom Abtaster 3 erzeugten Signale I eingefügt wird.

Die Zählerstufen 8 und 8a besitzen die Q-Ausgänge Qo bis Qn. Auch hier wirkt von Umdrehung zu Umdrehung abwechselnd eine Zählerstufe als Speicher und die andere als Zähler. Der halbe Messwert der im als Speicher wirkenden Zählstufe 8 bzw. 8a wird vom als Zähler laufenden Zählerstufe 8a bzw. 8 immer dann erreicht, wenn der Zustand eines Qx-Ausgangs des Speichers mit dem Zustand eines Q(x-1)-Ausgangs des Zählers übereinstimmt. Dies wird mit Hilfe von Äquivalenzschaltungen 10 und 10a festgestellt. Liefern sämtliche Äquivalenzschaltungen 10 bzw. 10a ein positives Ergebnis wird über die UND-Schaltungen 11 bzw. 11a ein I'-Signal erzeugt, welches über einen synchron mit den Umschaltern 5 und 6 gesteuerten Umschalter 12 an eine ODER-Schaltung 13 gelangt, welche dieses Signal I' zusammen mit dem vom Abtaster erzeugten Signal I zu einem Vertikalsynchronsignal V formt. Das Signal I' und das Signal I betätigen eine bistabile Kippstufe 14 an deren Ausgang Q das Kopfschaltsignal K anliegt.

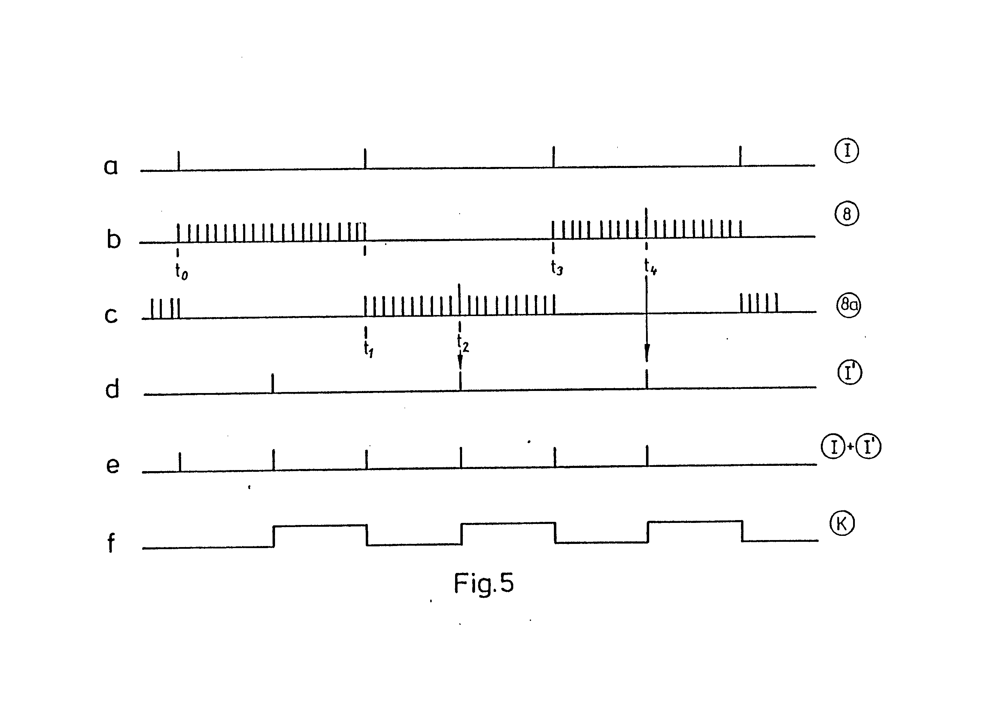

Die Diagramme nach Figur 5 zeigen die Wikungsweise der Schaltung nach Figur 4.

Figur 5a zeigt den Signalverlauf der von der Kopftrommel 1 erzeugten Signale I.

In Figur 5b sei zum Zeitpunkt t0 die Zählerstufe 8 zurückgesetzt und bis Zeitpunkt t1 mit Taktimpulsen 7 beaufschlagt. Zum Zeitpunkt t1 wird die Zählerstufe 8a zurückgesetzt und erhält die Taktimpulse 7, wie dies in Figur 5c gezeigt ist. Zum Zeitpunkt t2 habe die Zählerstufe 8a den halben Wert der Zählerstufe 8 erreicht, worauf die Logikschaltung 15a einen Impuls I' abgibt, wie in Figur 5d gezeigt. Zum Zeitpunkt t3 werden wieder die Rollen der Zählerstufen 8 und 8a vertauscht, wobei bei Erreichen des halben Zählerstandes der Zählerstufe 8 im Vergleich zum Zählerstand der Zählerstufe 8a ein Impuls I' über die Logikschaltung 15 abgegeben wird. Die Vertikalsynchronimpulse V ergeben sich aus der Kombination der Impulse nach Figur 5a und 5d. Die Kopfschaltuimpulse K nach Fig. 5f entstehen durch Setzen und Rücksetzen der bistabilen Kippstufe 14 mit Hilfe der Impulse nach Figur 5d und 5e.

Die zuvor beschriebene Schaltungsanordnung zeigt eine digitale Lösung. Es ist auch eine Schaltungsanordnung denkbar, die in Analogtechnik aufgebaut ist, indem die Zeitmessung mit Hilfe von durch Konstantstromquellen aufladbaren Kondensatoren vorgenommen wird und die Impulse I′ durch Komparatorschaltungen erzeugt werden, an deren Eingänge die Ladespannungen während einer Umdrehung der Kopftrommel und die geteilten Ladespannungen als Referenz aus der vorhergehenden Umdrehung der Kopftrommel gelegt sind.

**Patentanspruch**

Verfahren zur Erzeugung der Kopfschalt- und Vertikalsynchronsignale bei Videorecordern mit einer Kopftrommel (1) mit Abtastköpfen (V1, V2, T1, T2) unter Verwendung eines pro Umdrehung der Kopftrommel erzeugten Markierungssignals (I), bei dem für die Zeitdauer einer ersten Umdrehung der Kopftrommel (1) durch das Markierungssignal (I) eine Zählung von Clock-Impulsen in einem ersten Zähler (8) ausgelöst wird, während einer weiteren Umdrehung der Kopftrommel (1) durch das Markierungssignal (I) eine weitere Zählung von Clock-Impulsen in einem zweiten Zähler (8a) ausgelöst wird, die Zählergebnisse miteinander verglichen werden und bei Übereinstimmung ein Signal (I′) abgegeben wird, dadurch gekennzeichnet, daß die Clockimpulse mit derselben Frequenz für beide Zähler (8, 8a) von einem Clockgenerator (7) geliefert werden, die weitere Umdrehung auf die erste Umdrehung nachfolgt und das Zählergebnis des ersten Zählers vor dem Vergleich durch einen Faktor (360°/α) dividiert wird, der den Bruchteil einer Umdrehung entspricht, wobei (α) den Winkel darstellt, den ein Abtastkopf (V1, V2, T1, T2) in bezug auf den durch das Markierungssignal (I) gebildeten Bezugswinkel einnimmt.

**Revendication**

Procédé destiné à générer les signaux de commande des têtes et de synchronisation verticale sur des enregistreurs vidéo comprenant un tambour porte-têtes (1) avec des têtes de détection (V1, V2, T1, T2), en utilisant un signal de marquage (I) généré à chaque révolution du tambour porte-têtes, selon lequel le signal de marquage (I) déclenche un comptage des impulsions d'horloge dans un premier compteur (8) pendant la durée d'une première révolution du tambour porte-têtes (1), tandis que le signal de marquage (I) déclenche un autre comptage des impulsions d'horloge dans un deuxième compteur (8a) au cours d'une deuxième révolution du tambour porte-têtes (1), les résultats des compteurs étant comparés ensemble et un signal (I′) étant délivrée en cas de concordance, caractérisé en ce que les impulsions d'horloge sont délivrées par un générateur (7) avec la même fréquence aux deux compteurs (8, 8a), que la deuxième révolution succède à la première révolution et que le résultat du premier compteur est divisé avant la comparaison par un facteur (360°/α) correspondant à une fraction d'une révolution, (α) représentant l'angle occupé par un détecteur (V1, V2, T1, T2) eu égard à l'angle de référence formé par le signal de marquage (I).

**Claim**

A method of generating the head-switching signal and vertical synchronizing signal in video recorders having a head drum (1) with scanning heads (V1, V2, T1, T2), using a marking signal (I) generated on each revolution of the head drum, wherein, for the duration of a first revolution of the head drum (1), the counting of clock pulses in a first counter (8) is triggered by the marking signal (I), during a further revolution of the head drum (1), the further counting of clock pulses in a second counter (8a) is triggered by the marking signal (I), the results of the counts are compared with one another and in the event of agreement, a signal (I′) is delivered, characterised in that the clock pulses are delivered by a clock generator (7) at the same frequency for both counters (8, 8a), the further revolution follows on the first revolution, and before the comparison the result of the count of the first counter is divided by a factor (360°/α) which corresponds to the fraction of a revolution, (α) representing the angle which a scanning head (V1, V2, T1, T2) assumes in relation to the reference angle formed by the marking signal (I).

Fig.1

Fig.2

EP 0 239 572 B1

Fig.3

Fig. 4

EP 0 239 572 B1

Fig.5